(19) Europäisches Patentamt
European Patent Office
Office européen des brevets

(11) **EP 4 455 943 A1**

(12) **EUROPEAN PATENT APPLICATION**

(43) Date of publication:
**30.10.2024 Bulletin 2024/44**

(21) Application number: **23201202.1**

(22) Date of filing: **02.10.2023**

(51) International Patent Classification (IPC):
**G06N 3/0495** (2023.01)

(52) Cooperative Patent Classification (CPC):
**G06N 3/0495**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2023 TW 112116132**

(71) Applicant: **Wistron Corporation
New Taipei City 22181 (TW)**

(72) Inventors:
• **GUO, Jiun-In**
  **Hsinchu (TW)**
• **LIN, Wei-Chih**
  **Hsinchu (TW)**

(74) Representative: **Becker, Eberhard
Becker Kurig & Partner
Patentanwälte mbB
Bavariastraße 7
80336 München (DE)**

Remarks:
Amended claims in accordance with Rule 137(2)
EPC.

(54) **OPTIMIZING METHOD AND COMPUTING SYSTEM FOR DEEP LEARNING NETWORK**

(57) Disclosed are an optimizing method and a computing system (10) used for deep learning networks. The first data is obtained. The first data is quantized through the power of two quantization. The first data after the power of two quantization is the first format or the second format. The numbers of the first values in the first format or the second format is different. The second data is obtained. The second data is quantized through dynamic fixed-point quantization. A computation related to a deep learning network is performed on the quantized first data after the power of two quantization and the quantized second data after dynamic fixed-point quantization. Accordingly, the prediction precision could be increased, and the complexity of the model could be reduced.

FIG. 2

## Description

TECHNICAL FIELD

The present disclosure relates to a machine learning technique, and in particular relates to an optimizing method and a computing system for a deep learning network.

BACKGROUND

In recent years, as the artificial intelligence (AI) technology is continuously developed, the parameter quantity and operational complexity of the neural network model also increase accordingly. As a result, compression techniques for deep learning networks have become advanced significantly. It should be noted that quantization is an important technique for compressing models. However, there is still room for development in the prediction accuracy and compression ratio of existing quantized models.

SUMMARY

In view of the foregoing, an embodiment of the present disclosure provides an optimizing method and a computing system for a deep learning network, which are able to improve prediction accuracy and maintain a certain compression rate by using hybrid effective coding and quantization.

The optimizing method for a deep learning network in an embodiment of the present disclosure includes (but not limited to) the following steps: obtaining the first data; quantizing the first data into a first format or a second format through power of two quantization, the numbers of first values in the first format or the second format are different; using the first format or the second format as the target format; performing operation related to the deep learning network by using the first data quantized based on the target format.

The optimizing method for a deep learning network in an embodiment of the present disclosure includes (but not limited to) the following steps: obtaining the first data; quantizing the first data through power of two quantization, the first data quantized through power of two quantization is a first format or a second format, the numbers of first values in the first format or the second format are different; obtaining the second data; quantizing the second data through dynamic fixed-point quantization; performing operation related to the deep learning network on the quantized first data after the power of two quantization and the quantized second data after dynamic fixed-point quantization.

The computing system for deep learning network in an embodiment of the present disclosure includes a memory and a processor. The memory is configured to store program codes. The processor is coupled to the memory. The processor is configured to load program codes to execute the following steps: obtaining the first data; quantizing the first data into a first format or a second format through power of two quantization, the numbers of first values in the first format or the second format are different; using the first format or the second format as the target format; performing operation related to the deep learning network by using the first data quantized based on the target format.

Based on the above, according to the optimizing method and computing system for deep learning network according to the embodiments of the present disclosure, the two data are quantized through power of two quantization and dynamic fixed-point quantization in a specific format. In this way, the prediction accuracy may be improved and the model complexity may be reduced.

In order to make the above-mentioned features and advantages of the present disclosure more comprehensible, the following specific embodiments are described in detail in conjunction with the accompanying drawings.

BRIEF DESCRIPTION OF THE DRAWINGS

FIG. 1 is a block diagram of components of a computing system according to an embodiment of the present disclosure.
FIG. 2 is a flowchart of an optimizing method for a deep learning network according to an embodiment of the present disclosure.
FIG. 3 is a schematic diagram of quantization comparison according to an embodiment of the present disclosure.
FIG. 4 is a schematic diagram of a layer-by-layer scaling factor according to an embodiment of the present disclosure.
FIG. 5 is a flowchart of power of two quantization according to an embodiment of the present disclosure.
FIG. 6 is a schematic diagram of quantization levels of power of two quantization according to an embodiment of the present disclosure.
FIG. 7 is an example illustrating power of two quantization.
FIG. 8 is a flowchart of an optimization method for a deep learning network according to an embodiment of the present disclosure.
FIG. 9 is an example illustrating dynamic fixed-point quantization.
FIG. 10 is another example illustrating dynamic fixed-point quantization.
FIG. 11A and FIG. 11B are an example illustrating a multiply-accumulate (MAC) operation for two-hot encoding.
FIG. 12 is a flowchart of an application scenario according to an embodiment of the present disclosure.
FIG. 13 is a flowchart of model optimization according to an embodiment of the present disclosure.

DESCRIPTION OF EMBODIMENTS

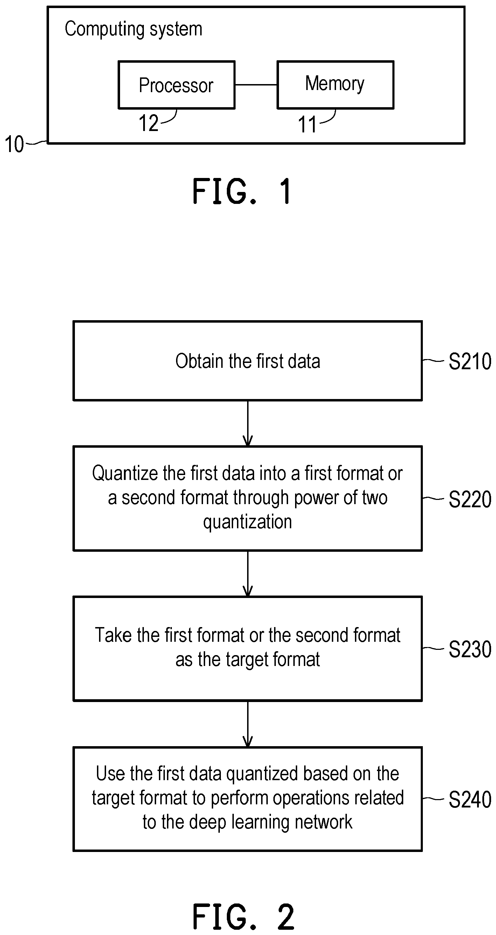

FIG. 1 is a block diagram of components of a computing system 10 according to an embodiment of the present disclosure. Please refer to FIG. 1, the computing system 10 includes (but not limited to) a memory 11 and a processor 12. The computing system 10 may be one or more desktop computers, notebook computers, smart phones, tablet computers, wearable devices, servers or other electronic devices.

The memory 11 may be any type of fixed or removable random access memory (RAM), read-only memory (ROM), flash memory, hard disk drive (HDD), solid-state drive (SSD) or similar components. In an embodiment, the memory 11 is configured to store program codes, software modules, configurations, data or files (e.g., data, model parameters, or operational values), which will be described in detail in subsequent embodiments.

The processor 12 is coupled to the memory 11. The processor 12 may be a central processing unit (CPU), a graphic processing unit (GPU), or other programmable general-purpose or special-purpose microprocessor, a digital signal processor (DSP), a programmable controller, a field programmable gate array (FPGA), an application-specific integrated circuit (ASIC), a neural network accelerator or other similar elements or combinations of the above elements. In an embodiment, the processor 12 is configured to execute all or part of the operations of the computing system 10, and is able to load and execute various program codes, software modules, files and data stored in the memory 11.

Hereinafter, various devices, components and modules in the computing system 10 will be incorporated to describe the method in the embodiments of the present disclosure. Each process of the method may be adjusted accordingly depending on the implementation, and the disclosure is not limited thereto.

FIG. 2 is a flowchart of an optimizing method for a deep learning network according to an embodiment of the present disclosure. Referring to FIG. 2, the processor 12 obtains the first data (step S210). In an embodiment, the first data is weights of a pre-training model based on a deep learning network. It should be noted that in the deep learning network, the convolution operation may be realized by sliding a convolution kernel on an input feature map (for example, an image or image feature set). The convolution operation involves a multiply-accumulate operation (or referred to as an MAC operation), and the multiply-accumulate operation may be regarded as the sum of weighted operations. From the perspective of weighted operation, the elements in the convolution kernel used in the convolution operation may be regarded as the weight of the weighted operation, and the input feature map may be regarded as a value corresponding to the weight.

The pre-training model refers to an algorithm based on a deep learning network (for example, YOLO, convolutional neural network (CNN), long short-term memory (LSTM), or generative adversarial network (GAN) and a model trained by inputting training samples and corresponding labels or real results. Algorithms based on deep learning networks are able to analyze the relationship between training samples and corresponding labels or real results to derive the law therefrom, so as to predict the unknown data through the law. The pre-training model is a machine learning model constructed after learning, and makes inference on the evaluation data accordingly. It should be noted that this pre-training model may be used for image recognition/ classification, object detection, semantic analysis or other inferences, and the embodiments of the present disclosure do not limit the use of the pre-training model. In some application scenarios, the trained pre-training model might be able to meet the standard of preset accuracy.

In other embodiments, the first data may also be other data/parameters in the pre-training model, or relevant algorithm-related parameters for network-based deep learning.

In an embodiment, the processor 12 may obtain the first data from the memory 11, or obtain the first data from an external electronic device or a storage device through a communication transceiver (for example, a transceiver circuit supporting Wi-Fi, a mobile network, or an optical fiber network), or a transmission interface (for example, USB or Thunderbolt).

The processor 12 quantizes the first data into a first format or a second format through power of two quantization (Step S220). Specifically, each layer of the pre-training model has a corresponding parameter (for example, weights, input/output activation values/feature values/feature maps). It is conceivable that an excessive number of parameters will require higher requirements in operation and storage, and the higher the complexity of the parameters, the higher the amount of operation will be. Quantization is one of the techniques used to reduce the complexity of neural networks. Quantization may reduce the number of bits used to exhibit activations/features or weights.

There are many types of quantization methods. For example, symmetric quantization, asymmetric quantization and clipping method. In addition, power of two quantization is a non-uniform quantization scheme proposed for bell-shaped and long-tailed weights. This scheme limits all quantization values to the addition of several powers of two (or powers of two) (i.e., power of two data sets), so it is possible to improve operational efficiency and is applicable to the numerical distribution of weights. The power of two data set is, for example, $\{0, 2^0, 2^1, 2^2, 2^3, 2^4\}$, but may also be other power of two combinations, and the embodiment of the present disclosure is not limited thereto.

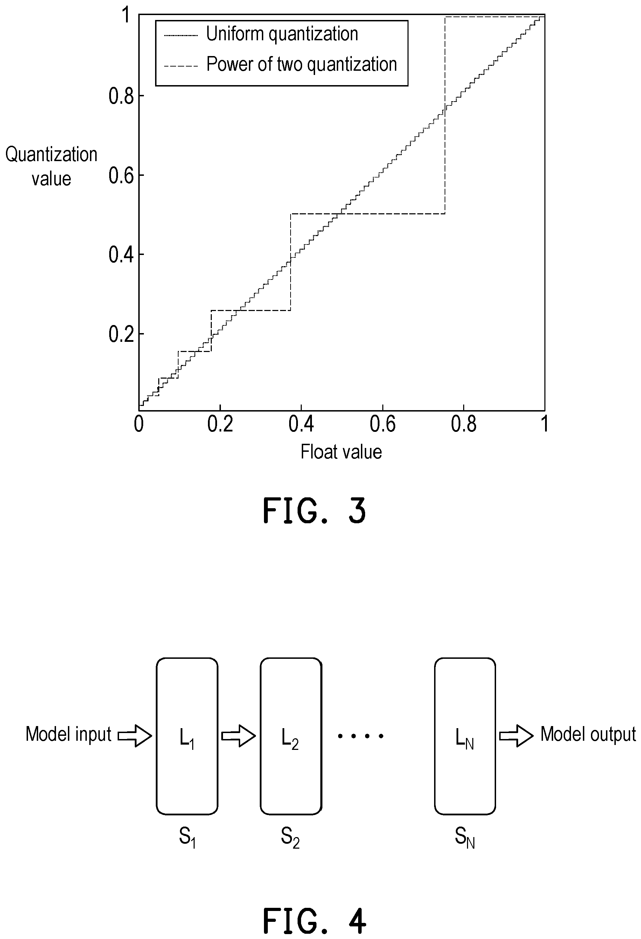

FIG. 3 is a schematic diagram of quantization comparison according to an embodiment of the present disclosure. Please refer to FIG. 3, the uniformly quantized quantization level is finer and more uniform, which means that more quantization points may be used for quantization when the float value is between 0 and 1. However, the distribution of quantization points of power of two quantization is denser in the area where the float value is close to 0 than in other areas, and the distribution of quantization points in the area where the float value is close to 1 is sparser than in other areas. It can be seen from this that the quantization method of encoding the value in the data as a power of two will cause accuracy loss of part of the whole model. However, the sensitivity of the weight is low and the numerical distribution is relatively concentrated, so the power of two quantization is suitable for the quantization of the weight.

The first format and the second format are different formats of the above-mentioned power of two data set. The numbers of first values in the first format and/or the second format are different. This first value is for example "1". That is to say, in the power of two data set, the first value is the number of value "1" corresponding to each element in the data set. For example, the value quantized by the power of two quantization is 2, then the value of the data set $\{0, 2^0, 2^1, 2^2\}$ is $\{0, 0, 1, 0\}$, and the number of the first value "1" is 1. In another example, for example, if the value quantized by the power of two quantization is 3, then the value of the data set $\{0, 2^0, 2^1, 2^2\}$ is $\{0, 1, 1, 0\}$, and the number of the first value "1" is 2.

In an embodiment, the first format is one-hot encoding. That is to say, the number of the value "1" corresponding to the data set quantized by the power of two quantization in the first format is 1. For example, the value of the data set $\{0, 2^0, 2^1, 2^2\}$ is $\{0, 0, 1, 0\}$, and the number of the first value "1" is 1. On the other hand, the second format is two-hot encoding. That is to say, the number of the value "1" corresponding to the data set quantized by the power of two quantization in the second format is 2. For example, the value of the data set $\{0, 2^0, 2^1, 2^2\}$ is $\{0, 1, 1, 0\}$, and the number of the first value "1" is 2.

FIG. 4 is a schematic diagram of a layer-by-layer scaling factor according to an embodiment of the present disclosure. Please refer to FIG. 4, the pre-training model based on deep learning network includes N layers $L_1$ to $L_N$, where N is a positive integer. Each layer $L_1$ to $L_N$ may be a convolutional layer, a pooling layer, a fully connected layer or other layers, and the embodiments of the present disclosure provide no limitation to the type of the layer. The first data belongs to parameters (for example, weights) in a specific layer among these layers $L_1$ to $L_N$. These layers $L_1$ to $L_N$ respectively correspond to their respective scales/scaling factors $S_1$ to $S_N$. Scaling factors $S_1$ to $S_N$ are used to represent a proportional relationship between floating points and integer/quantization values. Taking linear quantization as an example, the mathematical expression is:

$$q = round(s * x + z)\ldots(1)$$

In the formula, x and q are the values before and after quantization respectively, s is a scaling factor, z is a zero point (that is, the quantization value of 0 in the original range), and round() is used to round an integer. It can be seen from this that if the pre-training model includes N layers $L_1$ to $L_N$, there are N scaling factors $S_1$ to $S_N$. The scaling factors $S_1$ to $S_N$ will be continuously updated during the training process of the model.

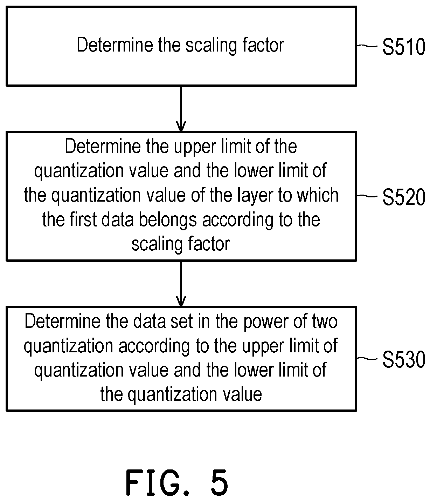

FIG. 5 is a flowchart of power of two quantization according to an embodiment of the present disclosure. Referring to FIG. 5, the processor 12 may determine the scaling factor of the layer to which the first data belongs (step S510). The mathematical expression of the scaling factor is:

$$S_n = \max(|W_n|)\ldots(2)$$

In formula, n represents the n-th layer $L_n$ (n is one of 1 to N), $W_n$ is the value (for example, weight) of the first data in this layer $L_n$, and max() is the maximum value. That is, the scaling factor of layer $L_n$ is the maximum value in the first data in the layer $L_n$.

The processor 12 may determine the upper limit of the quantization value and the lower limit of the quantization value of the layer to which the first data belongs according to the scaling factor (step S520). The quantization value is exemplified as 8 bits, the mathematical expressions of the upper limit of the quantization value and the lower limit of the quantization value are:

$$ub_n = \left\lfloor \log_2\left(\frac{4}{3} \times S_n\right)\right\rceil\ldots(3)$$

$$lb_n = ub_n - 7\ldots(4)$$

In the formula, $ub_n$ is the upper limit of quantization value of layer $L_n$, and $lb_n$ is the lower limit of quantization value of layer $L_n$. If the quantization value is other number of bits, the 7 in the lower limit of the quantization value may be adjusted accordingly. Since each layer corresponds to a respective scaling factor, the upper limit of the quantization value and/or the lower limit of the quantization value may also be different for different layers.

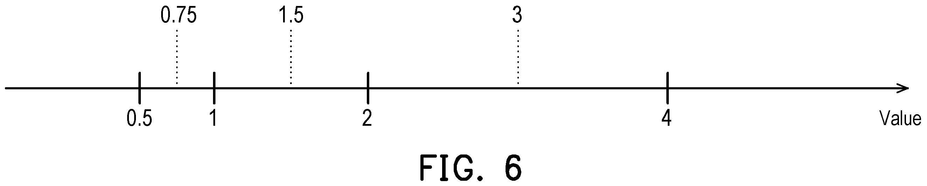

FIG. 6 is a schematic diagram of quantization levels of power of two quantization according to an embodiment of the present disclosure. Please refer to FIG. 6, regarding the constant "4/3" in the mathematical expression (3) of the upper limit of the quantization value, the quantization values are exemplified as 0.5, 1, 2, and 4. Assuming that the maximum value of the first data (that is, the scaling factor) is 1.5, no matter whether 1.5 is quantized to 1 or 2, the resulting quantization error is the same. Therefore, one of 1 or 2 may be selected, and the value of 1.5 is mapped to obtain the second power. For example, 1.5 is mapped to the quantization value on the right side of the value range, that is, mapped to 2 (that is, quantized to 2 or the quantization value is 2). Then, the log with base 2 and the floor function (that is, ⌊ ⌋ in mathematical expression (3)) are taken, so that the corresponding power term may be derived. The constant "4/3" may also be changed to "2/3", so that 1.5 is mapped to 1 to the left of the value range (that is, quantized to 1 or the quantization value is 1), but the last position where the floor function is taken is changed to ceil function. The reason that the floor function is adopted in the mathematical expression (3) of $ub_N$ is, when the maximum value of the first data falls in the range of 1.5 to 3, the maximum value is quantized to 2, and the resulting quantization error will be minimal.

Referring to FIG. 5, the processor 12 may determine the data set used in the power of two quantization of the layer of the first data according to the upper limit of quantization value and the lower limit of the quantization value (step S530). Data sets are used to define quantization values in the first format and the second format. Specifically, the mathematical expression of the data set $Q_n$ is:

$$Q_n = \{0, \pm 2^{lb_n}, \cdots, \pm 2^{ub_n}\} \ldots (5)$$

In the formula, $Q_n$ is the data set of layer $L_n$. That is to say, the upper limit of the quantization value and the lower limit of the quantization value are the upper limit and the lower limit of the power of two term. All the values (for example, weights) of the first data of the layer $L_n$ are permutations and combinations of the data set $Q_n$.

Referring to FIG. 2, the processor 12 takes the first format or the second format as the target format (step S230). In an embodiment, the processor 12 may quantize the first data into quantized data in a first format and quantized data in a second format, and then one of the quantized data in the first format and the quantized data in the second format is selected. The selected format is the target format. It is worth noting that although the complexity of using one-hot encoding is low, the prediction accuracy of the model might be lost. On the other hand, although using two-hot encoding may improve the prediction accuracy, the complexity might be increased. In contrast, the embodiment of the present disclosure may select one of the two formats (hereinafter referred to as "hybrid encoding") depending on the performance index (e.g., accuracy or complexity), so as to meet the application requirements.

In an embodiment, the processor 12 may determine one of the first format and the second format as the target format according to the quantization error. This quantization error is the error between the first data quantized by the power of two quantization into the first format or the second format and the (original) first data not quantized by the power of two quantization (for example, Euclidean distance, Mean Square Error (MSE), Root-Mean-Square Error (RMSE), Least-Mean-Square Error (LMSE), cosine similarity, or cosine distance). That is, the performance index is prediction accuracy. If the quantization error is smaller, the prediction accuracy may be maintained; otherwise, the prediction accuracy may be reduced.

In an embodiment, the processor 12 may select the format with the smallest quantization error as the target format. For example, if the error between the quantized data in the first format and the first data is smaller than the error between the quantized data in the second format and the first data, then the target format is the first format; and vice versa, the details are not repeated herein. Taking 0.361 as an example, the value after the power of two quantization in one-hot encoding is 0.25 (that is, $2^{-2}$), and the value after the power of two quantization in two-hot encoding is 0.375 (that is, $2^{-2}+2^{-1}$). Therefore, the quantization error corresponding to two-hot encoding is relatively small. Taking 0.243 as an example, the value after the power of two quantization in one-hot encoding is 0.25 (that is, $2^{-2}$), and the value after the power of two quantization in two-hot encoding is 0.251953125 (that is, $2^{-2}+2^{-9}$). Therefore, the quantization error corresponding to one-hot encoding is relatively small.

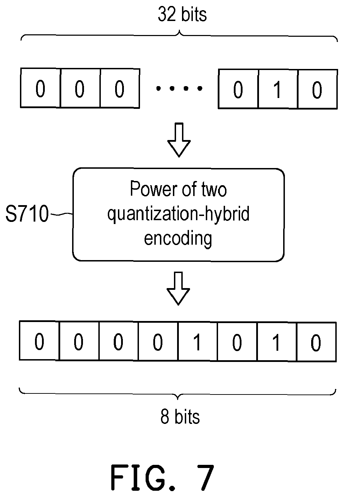

FIG. 7 is an example illustrating power of two quantization. Please refer to FIG. 7, the floating point of the first data is exemplified as 32 bits. Assuming that the target format is a two-hot encoding, then after the power of two quantization of the two-hot encoding (step S710), the first data (i.e., 8-bit quantized data) quantized based on this target format conforms to two-hot encoding. That is, the number of value "1" is two.

Referring to FIG. 2, the processor 12 uses the first data quantized based on the target format to perform operations related to the deep learning network (step S240). Specifically, the operation may be a multiplication operation, an MAC operation, and/or an addition operation. For example, if the first data are weights, their quantized data may be used to perform MAC operation with (quantized) feature maps to implement convolutional layers, fully connected layers or other computing layers.

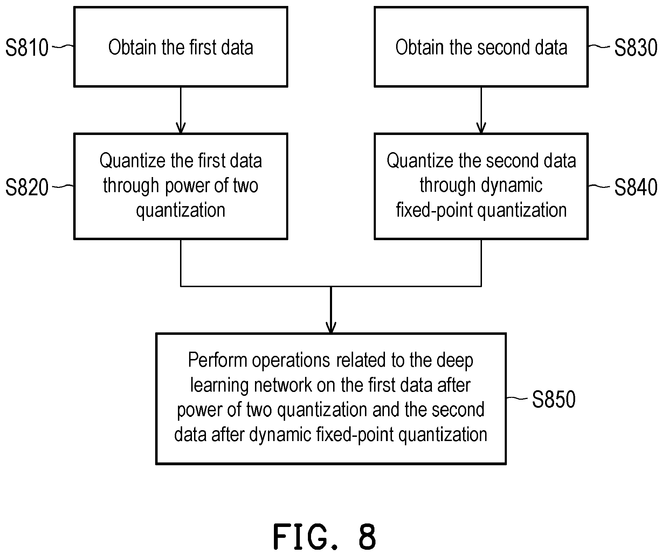

FIG. 8 is a flowchart of an optimizing method for a deep learning network according to an embodiment of the present disclosure. Referring to FIG. 8, the processor 12 obtains the first data (step S810). Specifically, for the details of step S810, reference may be made to the description of step S210, which will not be repeated here.

The processor 12 quantizes the first data through power of two quantization (step S820). Specifically, the first data (i.e., quantized data) after power of two quantization is one of the first format and the second format, and the numbers of first values in the first format and the second format are different. For the details of step S820, refer to the description of step S220. In an embodiment, the processor 12 may further determine the target format according to step S220. In another embodiment, the processor 12 has previously decided to use one of the first format and the second format for power of two quantization.

On the other hand, the processor 12 obtains the second data (step S830). In an embodiment, the second data are parameters that are calculated with the first data in the deep learning network. In an embodiment, the second data is a feature value/map or activation value of a pre-training model based on a deep learning network. For the details of pre-training model, reference may be made to the description of step S210, which will not be repeated here. In another embodiment, the second data may also be other data/parameters in the pre-training model, or relevant algorithm-related parameters for network-based deep learning.

In an embodiment, the processor 12 may obtain the second data from the memory 11, or obtain the second data from an external electronic device or a storage device through a communication transceiver (for example, a transceiver circuit supporting Wi-Fi, a mobile network, or an optical fiber network), or a transmission interface (for example, USB or Thunderbolt).

The processor 12 quantizes the second data through dynamic fixed-point quantization (step S840). Specifically, dynamic fixed-point quantization is a quantization scheme provided to solve the problem of limited expression ability of fixed-point quantization. "Dynamic" means that each layer in the pre-training model has its own quantization parameter. Quantization parameters are, for example, decimal/fractional length, integer length or bit width.

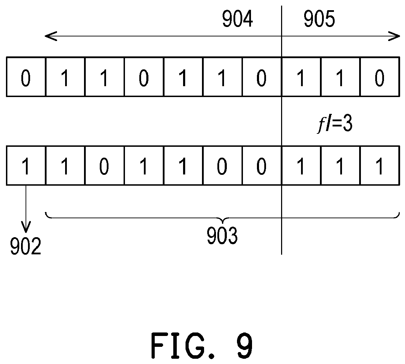

FIG. 9 is an example illustrating dynamic fixed-point quantization. Referring to FIG. 9, among the 10 bits representing a value, except for a sign bit 902, a mantissa 903 includes an integer part 904 and a fractional part 905. If the decimal/fractional length is 3 (i.e., fl=3), then the decimal part 905 occupies three bits as shown in the figure. In some application scenarios, dynamic fixed-point quantization is more suitable for hardware implementation than asymmetric quantization. The mathematical expression for dynamic fixed-point quantization is:

$$q_2 = (-1)^s \times 2^{-fl} \times \sum_{i=0}^{B-2} 2^i \times x_i \ldots (6)$$

In the formula, $q_2$ and $x_i$ are values before and after quantization, B is a bit width used for quantization, fl is a fractional length, and s represents a sign.

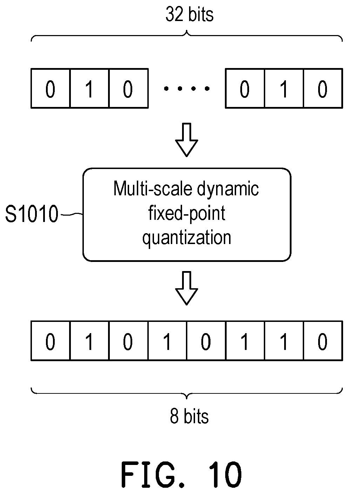

FIG. 10 is another example illustrating dynamic fixed-point quantization. Please refer to FIG. 10, the floating point of the second data is exemplified as 32 bits, then the multi-scale dynamic fixed-point quantization may be quantized according to the decimal length (for example, 3) obtained in advance analysis (step S1010), thereby obtaining quantized data in 8 bits.

In an embodiment, the processor 12 may quantize the second data through multi-scale dynamic fixed-point quantization. "Multi-scale" means that the quantizers corresponding to each layer in the pre-training model use different quantization parameters in different segments of the value range. Quantization parameters are, for example, decimal/fractional length, integer length or mantissa. For example, the processor 12 may assign more bit widths to the fractional length (FL) for the middle segment with denser numerical distribution; and the processor 12 may assign more bit widths to the integer length (IL) for the tail segment with sparser numerical distribution, thus achieving "multi-scale".

Referring to FIG. 8, the processor 12 performs operations related to the deep learning network on the first data after power of two quantization and the second data after dynamic fixed-point quantization (step S850). Specifically, the operation may be a multiplication operation, an MAC operation, and/or an addition operation. For example, if the first data is a weight and the second data is an input/output feature map/value, the quantized data corresponding to the two data may be subjected to the MAC operation to implement a convolutional layer, a fully connected layer or other computing layers.

In an embodiment, the operation is a multiplication operation, and the target format is a one-hot encoding. The processor 12 may shift the quantized second data through a shifter according to a position of the first value in the target format, so as to realize the multiplication operation. Since there is only 1 bit in one-hot encoding that has a value of 1, the processor 12 is able to find out the position of this bit in the data combination, and shift the quantized second data correspondingly, thereby obtaining the result of MAC operation. For example, if the least bit is the 0-th bit as a reference, and "1" is in the 1-st bit, the processor 12 shifts the second data by one bit. It can be seen that the multiplication operation may be realized by shifting.

For example, the MAC operation used in the convolution operation is: $\sum_{j=0}^{M} A_j W_j$ , where $A_j$ is the value of the second data (for example, feature value), $W_j$ is the value of the first data (for example, weight), and M is the length of quantized data and is a positive integer. Assuming that the value of the first data is quantized by one-hot encoding, the MAC operation may be changed into: $\sum_{j=0}^{M} A_j \ll S_{one-hot}$, where $\ll$ means shifting, and $S_{one-hot}$ is the position of the bit whose value is " 1" in the data combination.

In another embodiment, the operation is a multiplication operation, and the target format is a two-hot encoding. The processor 12 may shift the quantized second data through a shifter according to two positions of the first value in the target format, and add the shifted second data through an adder so as to realize the multiplication operation. Since the two-hot encoding has 2 bits with a value of 1, the processor 12 is able to find out the positions of two bits in the data combination, and respectively shift the quantized second data correspondingly and perform addition, thereby obtaining the result of MAC operation. It can be seen that the multiplication operation may be realized by shifting and addition operation.

For example, the MAC operation used in the convolution operation is:

$$\sum_{j=0}^{M} A_j W_j$$

, where $A_j$ is the value of the second data (for example, feature value), and $W_j$ is the value of the first data (for example, weight), M is the length of quantized data and is a positive integer. Assuming that the value of the first data is quantized by two-hot encoding, the MAC operation may be changed into:

$$\sum_{j=0}^{M} (A_j \ll S_{two-hot-0} + A_j \ll S_{two-hot-1})$$

, where $\ll$ means shifting, $S_{two-hoc-o}$ and $S_{two-hot-1}$ are respectively the positions of the two bits whose value is "1" in the data combination.

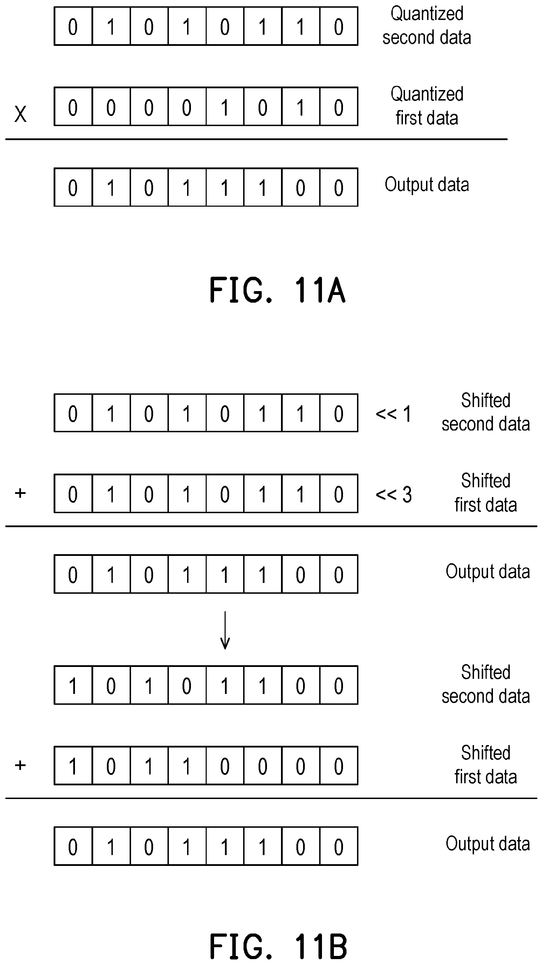

FIG. 11A and FIG. 11B are an example illustrating an MAC operation for two-hot encoding. Please refer to FIG. 11A, the quantized second data is [0 1 0 1 0 1 1 0], and the quantized first data is [0 0 0 0 1 0 1 0]. By multiplying the two data, it is possible to obtain the output data as [0 1 0 1 1 10 0].

Please refer to FIG. 11B, since the quantized first data in FIG. 11A is based on two-hot encoding, there are two values of "1". With the least bit as the 0-th bit as the reference, "1" is in the 1-st and 3-rd bit. Therefore, the processor 12 shifts the quantized second data by one bit and three bits respectively. Next, the processor 12 adds the second data shifted by one bit and the second data shifted by three bits, and the output data is also [01011100].

Since the operation complexity of the shifter and the adder is lower than that of the multiplier, the operation complexity MAY be reduced by combining the shifter and the adder through power of two quantization.

It should be noted that the above embodiments may be implemented layer by layer.

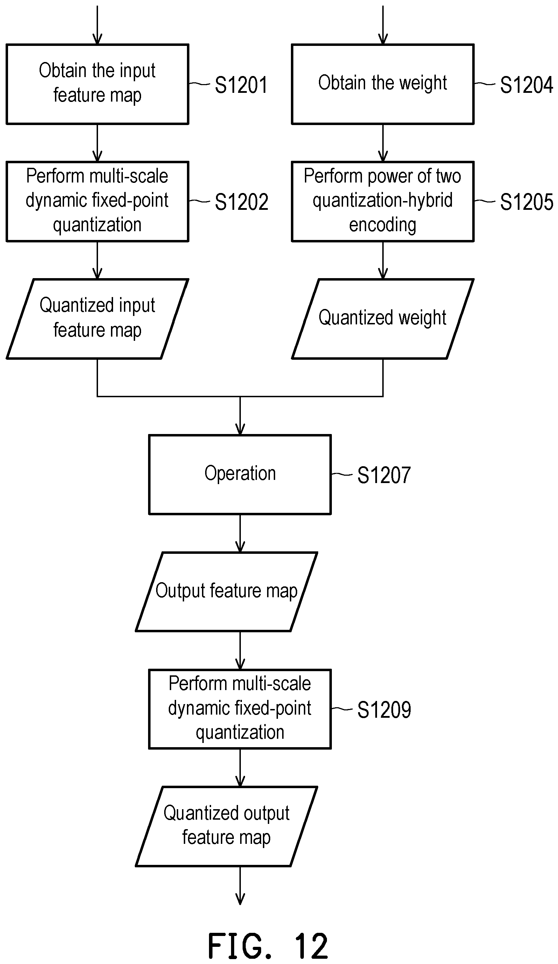

For example, FIG. 12 is a flowchart of an application scenario according to an embodiment of the present disclosure. Please refer to FIG. 12, which shows a certain layer of the pre-training model, the processor 12 obtains the input feature map of 32-bit float value (step S1201), and performs multi-scale dynamic fixed-point quantization on this input feature map (step S1202) to quantize output feature map of 32-bit float value into a quantized input feature map of 8 bits. On the other hand, the processor 12 obtains the weight of the 32-bit float value (step S1204), and performs power of two quantization on the weight (step S1205), so that the weight of the 32-bit float value is quantized to the quantized weight of 8 bits. Selecting one from the first format and the second format is called "hybrid encoding". The processor 12 inputs the quantized input feature map and the quantized weights to the feature layer (e.g., convolutional layer or fully connected layer) of the pre-training model to perform corresponding operations (step S1207). Next, the processor 12 performs multi-scale dynamic fixed-point quantization on the calculated output feature map (step S1209), so as to quantize the output feature map into a quantized output feature map of 8 bits. The processor 12 may use the input feature map as the next layer, and repeat the above steps.

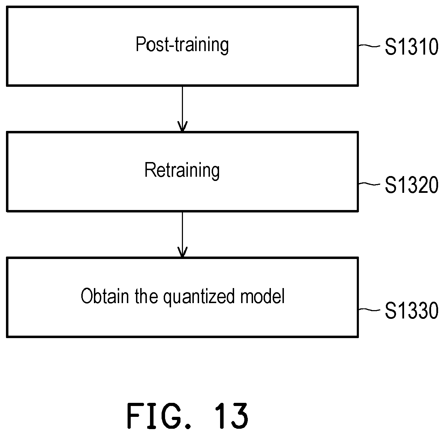

FIG. 13 is a flowchart of model optimization according to an embodiment of the present disclosure. Referring to FIG. 13, after the parameters of the model are quantized layer by layer, the processor 12 may obtain the quantized model. The processor 12 may post-train the quantized model (step S1310). For example, the quantized model is trained using training samples with labeled results. The processor 12 may retrain/fine-tune the trained quantization model (step S1320). In some application scenarios, post-training a trained model may reduce prediction accuracy. Therefore, the accuracy may be improved by fine-tuning. For instance, a straight through estimator with boundary constraint (STEBC) is utilized to determine a gradient for quantization whose parameter type is weight. Finally, the processor 12 may obtain the fine-tuned quantized model (step S1330). In this way, the prediction accuracy may be further improved.

In some application scenarios, the quantized model may be used for image recognition, object detection, semantic analysis or other inferences.

In summary, in the optimizing method and computing system for the deep learning network of the embodiment of the present disclosure, the first data in one-hot encoding after power of two quantization is adopted, and the second data is quantized by multi-scale dynamic fixed-point and input to a specific layer of the training model for operation. In this way, the prediction accuracy may be improved (for example, up to 85% or more, or the difference compared with the unquantized model is less than 3%), the model complexity may be reduced (for example, by up to 80% or more), and implementation through hardware is applicable.

**Claims**

1. An optimizing method for a deep learning network, **characterized in that** the method comprises:

    obtaining a first data;
    quantizing the first data into a first format or a second format through a power of two quantization, wherein numbers of first values in the first format or the second format are different;
    using the first format or the second format as a target format; and
performing an operation related to a deep learning network by using the first data quantized based on the target format.

2. The optimizing method for the deep learning network according to claim 1, wherein using the first format or the second format as the target format comprises: determining one of the first format and the second format as the target format according to a quantization error, wherein the quantization error is an error between the first data quantized by the power of two quantization into the first format or the second format and the first data not quantized by the power of two quantization.

3. The optimizing method for the deep learning network according to claim 1 or claim 2, wherein the first data belongs to one of a plurality of layers ($L_1 \sim L_N$) in a pre-training model based on the deep learning network, and quantizing the first data into the first format or the second format through the power of two quantization comprises:

   determining a scaling factor ($S_1 \sim S_N$) of the layer ($L_1 \sim L_N$);
   determining an upper limit of a quantization value and a lower limit of the quantization value of the layer ($L_1 \sim L_N$) according to the scaling factor ($S_1 \sim S_N$); and
   determining a data set in the power of two quantization for the layer ($L_1 \sim L_N$) according to the upper limit of the quantization value and the lower limit of the quantization value, wherein the data set is used to define quantization values in the first format and the second format.

4. The optimizing method for the deep learning network according to any one of claim 1 to claim 3, wherein the first format is one-hot encoding, the second format is two-hot encoding, and the first data is a weight of a pre-training model based on the deep learning network.

5. The optimizing method for the deep learning network according to claim 4, wherein the operation is a multiplication operation, and the target format is the one-hot encoding, and performing the operation related to the deep learning network using the first data quantized based on the target format comprises:

   shifting a second data through a shifter according to a position of the first value in the target format; or
   the operation is a multiplication operation, and the target format is the two-hot encoding, and performing the operation related to the deep learning network using the first data quantized based on the target format comprises:

   shifting a second data through a shifter according to two positions of the first value in the target format; and
   adding the shifted second data by an adder, wherein the second data is a parameter for performing the operation with the first data in the deep learning network.

6. An optimizing method for a deep learning network, **characterized in that** the method comprises:

   obtaining a first data;
   quantizing the first data through a power of two quantization, wherein the first data quantized through the power of two quantization is a first format or a second format, and numbers of first values in the first format or the second format are different;
   obtaining a second data;
   quantizing the second data through a dynamic fixed-point quantization; and
   performing an operation related to a deep learning network on the quantized first data after the power of two quantization and the quantized second data after the dynamic fixed-point quantization.

7. The optimizing method for the deep learning network according to claim 6, wherein quantizing the first data through the power of two quantization comprises:

   quantizing the first data into the first format or the second format through the power of two quantization; and
   using the first format or the second format as a target format, wherein performing the operation related to the deep learning network on the quantized first data after the power of two quantization and the quantized second data after the dynamic fixed-point quantization comprises:
   performing the operation using the first data quantized based on the target format.

8. The optimizing method for the deep learning network according to claim 7, wherein using the first format or the second format as the target format comprises: determining one of the first format and the second format as the target format according to a quantization error, wherein the quantization error is an error between the first data quantized by the power of two quantization into the first format or the second format and the first data not quantized by the power of two quantization.

9. The optimizing method for the deep learning network according to claim 7, wherein the first data belongs to one of a plurality of layers ($L_1 \sim L_N$) in a pre-training model based on the deep learning network, and quantizing the first data into the first format or the second format through the power of two quantization comprises:

determining a scaling factor ($S_1 \sim S_N$) of the layer ($L_1 \sim L_N$);
determining an upper limit of a quantization value and a lower limit of the quantization value of the layer ($L_1 \sim L_N$) according to the scaling factor ($S_1 \sim S_N$); and
determining a data set in the power of two quantization for the layer ($L_1 \sim L_N$) according to the upper limit of the quantization value and the lower limit of the quantization value, wherein the data set is used to define quantization values in the first format and the second format.

10. The optimizing method for the deep learning network according to claim 7, wherein the first format is one-hot encoding, the second format is two-hot encoding, and the first data is a weight of a pre-training model based on the deep learning network, and the second data is a feature map of the pre-training model, the operation is a multiplication operation, the target format is the one-hot encoding, and performing the operation related to the deep learning network on the quantized first data after the power of two quantization and the quantized second data after the dynamic fixed-point quantization comprises:
shifting the second data through a shifter according to a position of the first value in the target format, wherein the operation is a multiplication operation, and the target format is the two-hot encoding, and performing the operation related to the deep learning network on the quantized first data after the power of two quantization and the quantized second data after the dynamic fixed-point quantization comprises:

shifting a second data through a shifter according to two positions of the first value in the target format; and
adding the shifted second data by an adder.

11. A computing system (10) for a deep learning network, **characterized in that** the computer system (10) comprises:

a memory (11), which is configured to store program codes; and
a processor (12), which is coupled to the memory (11) and configured to load the program codes to:

obtain a first data;
quantize the first data into a first format or a second format through a power of two quantization, wherein numbers of first values in the first format or the second format are different;
use the first format or the second format as a target format; and
perform an operation related to a deep learning network by using the first data quantized based on the target format.

12. The computing system for the deep learning network according to claim 11, wherein the processor is further configured to:
determine one of the first format and the second format as the target format according to a quantization error, wherein the quantization error is an error between the first data quantized by the power of two quantization into the first format or the second format and the first data not quantized by the power of two quantization.

13. The computing system for the deep learning network according to claim 11 or claim 12, wherein the first data belongs to one of a plurality of layers ($L_1 \sim L_N$) in a pre-training model based on the deep learning network, and the processor is further configured to:

determine a scaling factor ($S_1 \sim S_N$) of the layer ($L_1 \sim L_N$);
determine an upper limit of a quantization value and a lower limit of the quantization value of the layer ($L_1 \sim L_N$) according to the scaling factor ($S_1 \sim S_N$); and
determine a data set in the power of two quantization for the layer ($L_1 \sim L_N$) according to the upper limit of the quantization value and the lower limit of the quantization value, wherein the data set is used to define quantization values in the first format and the second format.

14. The computing system for the deep learning network according to any one of claim 11 to claim 13, wherein the first format is one-hot encoding, the second format is two-hot encoding, the first data is a weight of a pre-training model based on the deep learning network, and a second data is a feature map of the pre-training model, the operation is a multiplication operation, and the target format is the one-hot encoding, and the processor is further configured to:
shift a second data through a shifter according to a position of the first value in the target format, , wherein the operation is a multiplication operation, and the target format is the two-hot encoding, and the processor is further configured to:

shift a second data through a shifter according to two positions of the first value in the target format; and

add the shifted second data and the first data quantized based on the target format through an adder, wherein the second data is a parameter for performing the operation with the first data in the deep learning network.

15. The computing system for the deep learning network according to claim 11, wherein the processor is further configured to:

obtain a second data;
quantize the second data through a dynamic fixed-point quantization; and
perform the operation on the quantized first data after the power of two quantization and the quantized second data after the dynamic fixed-point quantization.

**Amended claims in accordance with Rule 137(2) EPC.**

1. An optimizing method for a deep learning network, comprising:

obtaining a first data;
quantizing the first data into a first format or a second format through a power of two quantization, wherein a number of elements having a first value in a data set after the first data quantized by the power of two quantization into the first format and a number of elements having the first value in the data set after the first data quantized by the power of two quantization into the second format are different;
using the first format or the second format as a target format; and
**characterized by** the optimizing method further comprising:

determining one of the first format and the second format as the target format according to a quantization error, wherein the quantization error is an error between a quantized data in the first format or in the second format through the power of two quantization and the first data not quantized by the power of two quantization; and
performing an operation related to a deep learning network by using the quantized data of the first data quantized based on the target format.

2. The optimizing method for the deep learning network according to claim 1, wherein the first data belongs to one of a plurality of layers ($L_1 \sim L_N$) in a pre-training model based on the deep learning network, and quantizing the first data into the first format or the second format through the power of two quantization comprises:

determining a scaling factor ($S_1 \sim S_N$) of the layer ($L_1 \sim L_N$);
determining an upper limit of a quantization value and a lower limit of the quantization value of the layer ($L_1 \sim L_N$) according to the scaling factor ($S_1 \sim S_N$); and
determining the data set in the power of two quantization for the layer ($L_1 \sim L_N$) according to the upper limit of the quantization value and the lower limit of the quantization value, wherein the data set is used to define quantization values in the first format and the second format.

3. The optimizing method for the deep learning network according to claim 1 or claim 2, wherein the first format is one-hot encoding, the second format is two-hot encoding, and the first data is a weight of a pre-training model based on the deep learning network.

4. The optimizing method for the deep learning network according to claim 3, wherein the operation is a multiplication operation, and the target format is the one-hot encoding, and performing the operation related to the deep learning network using the first data quantized based on the target format comprises:

shifting a second data through a shifter according to a position of the first value in the target format; or
the operation is a multiplication operation, and the target format is the two-hot encoding, and performing the operation related to the deep learning network using the first data quantized based on the target format comprises:

shifting a second data through a shifter according to two positions of the first value in the target format; and
adding the shifted second data by an adder, wherein the second data is a parameter for performing the operation with the first data in the deep learning network.

5. The optimizing method for the deep learning network according to claim 1, further comprising:

obtaining a second data;
quantizing the second data through a dynamic fixed-point quantization;
wherein performing the operation related to the deep learning network by using the quantized data quantized based on the target format comprises performing an operation related to the deep learning network on the quantized data of the first data after the power of two quantization and a quantized data of the second data after the dynamic fixed-point quantization.

6. The optimizing method for the deep learning network according to claim 5, wherein the first data belongs to one of a plurality of layers ($L_1$~$L_N$) in a pre-training model based on the deep learning network, and quantizing the first data into the first format or the second format through the power of two quantization comprises:

   determining a scaling factor ($S_1$~$S_N$) of the layer ($L_1$~$L_N$);
   determining an upper limit of a quantization value and a lower limit of the quantization value of the layer ($L_1$~$L_N$) according to the scaling factor ($S_1$~$S_N$); and
   determining a data set in the power of two quantization for the layer ($L_1$~$L_N$) according to the upper limit of the quantization value and the lower limit of the quantization value, wherein the data set is used to define quantization values in the first format and the second format.

7. The optimizing method for the deep learning network according to claim 5, wherein the first format is one-hot encoding, the second format is two-hot encoding, and the first data is a weight of a pre-training model based on the deep learning network, and the second data is a feature map of the pre-training model, the operation is a multiplication operation, the target format is the one-hot encoding, and performing the operation related to the deep learning network on the quantized first data after the power of two quantization and the quantized second data after the dynamic fixed-point quantization comprises:
   shifting the second data through a shifter according to a position of the first value in the target format, wherein the operation is a multiplication operation, and the target format is the two-hot encoding, and performing the operation related to the deep learning network on the quantized first data after the power of two quantization and the quantized second data after the dynamic fixed-point quantization comprises:

   shifting a second data through a shifter according to two positions of the first value in the target format; and
   adding the shifted second data by an adder.

8. A computing system (10) for a deep learning network, comprising:

   a memory (11), which is configured to store program codes; and
   a processor (12), which is coupled to the memory (11) and configured to load the program codes to:

   obtain a first data;
   quantize the first data into a first format or a second format through a power of two quantization, wherein a number of elements having a first value in a data set after the first data quantized by the power of two quantization into the first format and a number of elements having the first value in the data set after the first data quantized by the power of two quantization into the second format are different;
   use the first format or the second format as a target format; and
   **characterized in that** the processor (12) is further configured to
   determine one of the first format and the second format as the target format according to a quantization error, wherein the quantization error is an error between a quantized data in the first format or in the second format through the power of two quantization and the first data not quantized by the power of two quantization; and
   perform an operation related to a deep learning network by using the quantized data of the first data quantized based on the target format.

9. The computing system for the deep learning network according to claim 8, wherein the first data belongs to one of a plurality of layers ($L_1$~$L_N$) in a pre-training model based on the deep learning network, and the processor is further configured to:

   determine a scaling factor ($S_1$-$S_N$) of the layer ($L_1$~$L_N$);
   determine an upper limit of a quantization value and a lower limit of the quantization value of the layer ($L_1$~$L_N$) according to the scaling factor ($S_1$~$S_N$); and
   determine the data set in the power of two quantization for the layer ($L_1$~$L_N$) according to the upper limit of the quantization value and the lower limit of the quantization value, wherein the data set is used to define quantization values in the first format and the second format.

10. The computing system for the deep learning network according to claim 8 or claim 9, wherein the first format is one-hot encoding, the second format is two-hot encoding, the first data is a weight of a pre-training model based on the deep learning network, and a second data is a feature map of the pre-training model, the operation is a multiplication operation, and the target format is the one-hot encoding, and the processor is further configured to:

shift a second data through a shifter according to a position of the first value in the target format, , wherein the operation is a multiplication operation, and the target format is the two-hot encoding, and the processor is further configured to:

shift a second data through a shifter according to two positions of the first value in the target format; and
add the shifted second data and the first data quantized based on the target format through an adder, wherein the second data is a parameter for performing the operation with the first data in the deep learning network.

11. The computing system for the deep learning network according to claim 8, wherein the processor is further configured to:

obtain a second data;
quantize the second data through a dynamic fixed-point quantization; and
perform the operation on the quantized first data after the power of two quantization and the quantized second data after the dynamic fixed-point quantization.

Computing system

| Processor | — | Memory |

12

11

10

## FIG. 1

```
Obtain the first data                                    S210

Quantize the first data into a first format or
a second format through power of two                     S220
quantization

Take the first format or the second format               S230
as the target format

Use the first data quantized based on the
target format to perform operations related              S240
to the deep learning network
```

## FIG. 2

FIG. 3

FIG. 4

Determine the scaling factor — S510

Determine the upper limit of the quantization value and the lower limit of the quantization value of the layer to which the first data belongs according to the scaling factor — S520

Determine the data set in the power of two quantization according to the upper limit of quantization value and the lower limit of the quantization value — S530

FIG. 5

FIG. 6

32 bits

| 0 | 0 | 0 | · · · · | 0 | 1 | 0 |

⇓

S710 — | Power of two quantization-hybrid encoding |

⇓

| 0 | 0 | 0 | 0 | 1 | 0 | 1 | 0 |

8 bits

# FIG. 7

S810 — | Obtain the first data |

S830 — | Obtain the second data |

S820 — | Quantize the first data through power of two quantization |

S840 — | Quantize the second data through dynamic fixed-point quantization |

S850 — | Perform operations related to the deep learning network on the first data after power of two quantization and the second data after dynamic fixed-point quantization |

# FIG. 8

FIG. 9

32 bits

| 0 | 1 | 0 | · · · · | 0 | 1 | 0 |

⇩

S1010 — Multi-scale dynamic fixed-point quantization

⇩

| 0 | 1 | 0 | 1 | 0 | 1 | 1 | 0 |

8 bits

FIG. 10

| 0 | 1 | 0 | 1 | 0 | 1 | 1 | 0 | Quantized second data |

X | 0 | 0 | 0 | 0 | 1 | 0 | 1 | 0 | Quantized first data |

| 0 | 1 | 0 | 1 | 1 | 1 | 0 | 0 | Output data |

# FIG. 11A

| 0 | 1 | 0 | 1 | 0 | 1 | 1 | 0 | << 1 Shifted second data |

+ | 0 | 1 | 0 | 1 | 0 | 1 | 1 | 0 | << 3 Shifted first data |

| 0 | 1 | 0 | 1 | 1 | 1 | 0 | 0 | Output data |

| 1 | 0 | 1 | 0 | 1 | 1 | 0 | 0 | Shifted second data |

+ | 1 | 0 | 1 | 1 | 0 | 0 | 0 | 0 | Shifted first data |

| 0 | 1 | 0 | 1 | 1 | 1 | 0 | 0 | Output data |

# FIG. 11B

FIG. 12

Post-training — S1310

Retraining — S1320

Obtain the quantized model — S1330

FIG. 13

| | Europäisches Patentamt European Patent Office Office européen des brevets | **EUROPEAN SEARCH REPORT** | **Application Number** EP 23 20 1202 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MUHAMMAD ABDULLAH HANIF ET AL: "CoNLoCNN: Exploiting Correlation and Non-Uniform Quantization for Energy-Efficient Low-precision Deep Convolutional Neural Networks", ARXIV.ORG, CORNELL UNIVERSITY LIBRARY, 201 OLIN LIBRARY CORNELL UNIVERSITY ITHACA, NY 14853, 31 July 2022 (2022-07-31), XP091284014, * abstract; sections III, IV, V, VI; figure 14 * | 1-15 | INV. G06N3/0495 |
| A | LI GANG ET AL: "Hardware Acceleration of CNN with One-Hot Quantization of Weights and Activations", 2020 DESIGN, AUTOMATION & TEST IN EUROPE CONFERENCE & EXHIBITION (DATE), EDAA, 9 March 2020 (2020-03-09), pages 971-974, XP033781504, DOI: 10.23919/DATE48585.2020.9116359 [retrieved on 2020-06-12] * abstract; sections III and IV * | 1-15 | |
| A | SUNG-EN CHANG ET AL: "MSP: An FPGA-Specific Mixed-Scheme, Multi-Precision Deep Neural Network Quantization Framework", ARXIV.ORG, CORNELL UNIVERSITY LIBRARY, 201 OLIN LIBRARY CORNELL UNIVERSITY ITHACA, NY 14853, 17 October 2020 (2020-10-17), XP081789551, * abstract, section 2.1.2, 2.1.3, 3, 4 * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 4 March 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

Application Number

EP 23 20 1202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WESS MATTHIAS ET AL: "Weighted Quantization-Regularization in DNNs for Weight Memory Minimization Toward HW Implementation", IEEE TRANSACTIONS ON COMPUTER-AIDED DESIGN OF INTEGRATED CIRCUITS AND SYSTEMS, IEEE, USA, vol. 37, no. 11, 18 July 2018 (2018-07-18), pages 2929-2939, XP011692583, ISSN: 0278-0070, DOI: 10.1109/TCAD.2018.2857080 [retrieved on 2018-10-17] * abstract; section III, IV; figure 2 * | 1-15 | |

-----

TECHNICAL FIELDS
SEARCHED      (IPC)

The present search report has been drawn up for all claims

| Place of search | Date of completion of the search | Examiner |
|---|---|---|
| The Hague | 4 March 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)